# EUROPEAN PATENT APPLICATION

(11) **EP 1 591 694 A2**
(43) Date of publication of application: **02.11.2005**
(21) Application number: 05252558.1
(22) Date of filing: 25.04.2005
(51) Int. Cl.: F16H 48/08

(54) **Differential carrier assembly**

(30) Priority: 28.04.2004 GB 0409418
(71) Applicant: Meritor Heavy Vehicle Systems Cameri SpA, Cameri (Novara) 28062 (IT)
(72) Inventor: Pontanari, Marco, 38066 Riva del Garda (TN) (IT); Gianone, Roberto, 28010 Barengo (NO) (IT); Magnago, Clemente, 28069 Trecate (NO) (IT); Bassi, Marco, 20026 Novate Milanese (IT)
(74) Representative: Jones, John Bryn

(57) **Abstract**

A differential carrier assembly including
a differential carrier (60),
a differential casing (24) having a ring gear (22) and being supported on right and left differential bearings for rotation about a differential axis (B), the right and left differential bearings (94,96) each being supported in respective right and left bearing housings,
a pinion having a pinion gear (42) in meshing engagement with the ring gear (22), and having a spigot (44) positioned on said axis side of the pinion gear (42), the spigot (44) being supported in a spigot bearing with the spigot bearing (54) being supported in a spigot bearing housing,
in which one of the right or left bearing housings (98,99) and the spigot bearing housing (56) are formed on a common component which is separate from and securable to the differential carrier.

## Description

The present invention relates to differential carrier assemblies.

Known differential carrier assemblies include several components, the primary ones being a differential carrier, an input pinion, a ring gear, and a differential casing. Various components are mounted on bearings, and it is important to ensure the correct pre-load on certain bearings during assembly. It is also important to ensure the correct back lash between the ring gear and the input pinion. Thus, it is necessary to ensure that the input pinion is positioned longitudinally (relative to the pinion axis) correctly relative to the ring gear. It is also important to ensure that the ring gear is correctly positioned laterally (relative to the input pinion axis). For these reasons, the correct assembly of a differential carrier is time consuming, complicated, and therefore expensive.

In particular, it is known to have an input pinion having a pinion gear mounted between a pinion shaft and a spigot. The spigot (which is on the differential casing side of the pinion gear) is rotatably mounted in a spigot bearing which in turn is mounted in a spigot bearing housing. The pinion shaft is also mounted in bearings which again are mounted in a pinion shaft bearing housing. The spigot bearing housing and the pinion shaft bearing housing are formed in an integral component and as such the pinion shaft bearing housing must be large enough to allow the pinion gear to pass therethrough during assembly. Such an arrangement is shown in US5520589, GB1545004, GB226717, GB1247751 and figure 2 of US5203750. Such arrangements either require a large internal diameter for the pinion shaft bearing housing and/or the outer diameter of the pinion gear teeth to be machined away (as shown in figure 2 of US5203750) to ensure the pinion gear fits through the pinion shaft bearing housing.

Alternatively, the pinion can be assembled into the pinion shaft bearing assembly housing from the differential casing side. Under these circumstances the diameter of the pinion gear can be larger than the internal diameter of the pinion shaft bearing assembly housing. However, the spigot bearing housing must be provided as a separate component to ensure the components can be assembled. Such an arrangement is shown in US4526063 and figure 1 of US5203750. However, in both these embodiments the pinion shaft bearing assembly housing is integrally formed with the right and left differential bearing housing and hence the differential bearing housings are formed on a separate component to the spigot bearing housing.

An object of the present invention is to provide a differential carrier assembly that is easier to assemble. Another object of the present invention is to provide a differential carrier assembly that requires less adjustment to correctly assemble. Another object of the present invention is to provide a differential carrier assembly that is easier to machine.

Thus, according to the present invention there is provided a differential carrier assembly as defined in the accompanying independent claims.

The invention will now be described, by way of example only, with reference to the accompanying drawings in which:-
FIGURE 1 is an isometric view of an axle assembly including a differential carrier assembly according to the present invention,
FIGURE 2 is a plan cross section view of the differential carrier assembly of figure 1,
FIGURES 3 to 5 are differing views of a differential bearing housing and a pinion spigot bearing housing formed on a common component,
FIGURE 6 is a view of a differential bearing housing formed on a separate component, and

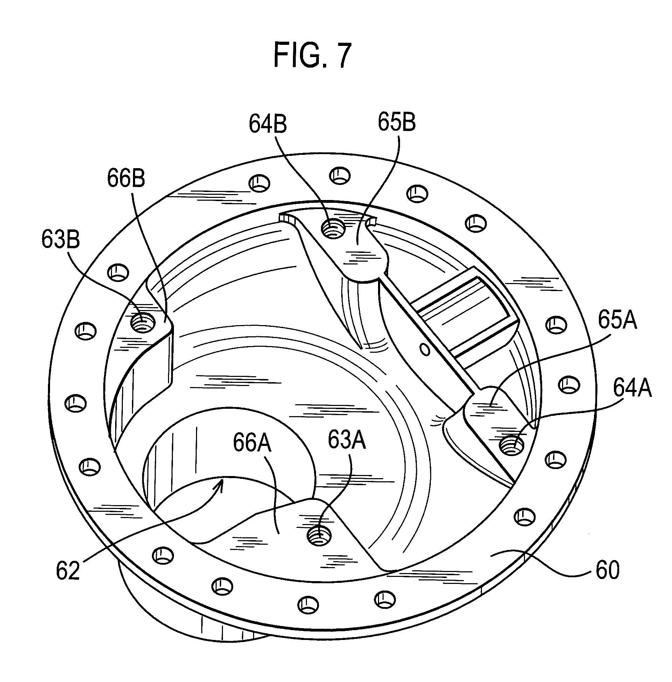

FIGURE 7 is a view of a differential carrier.

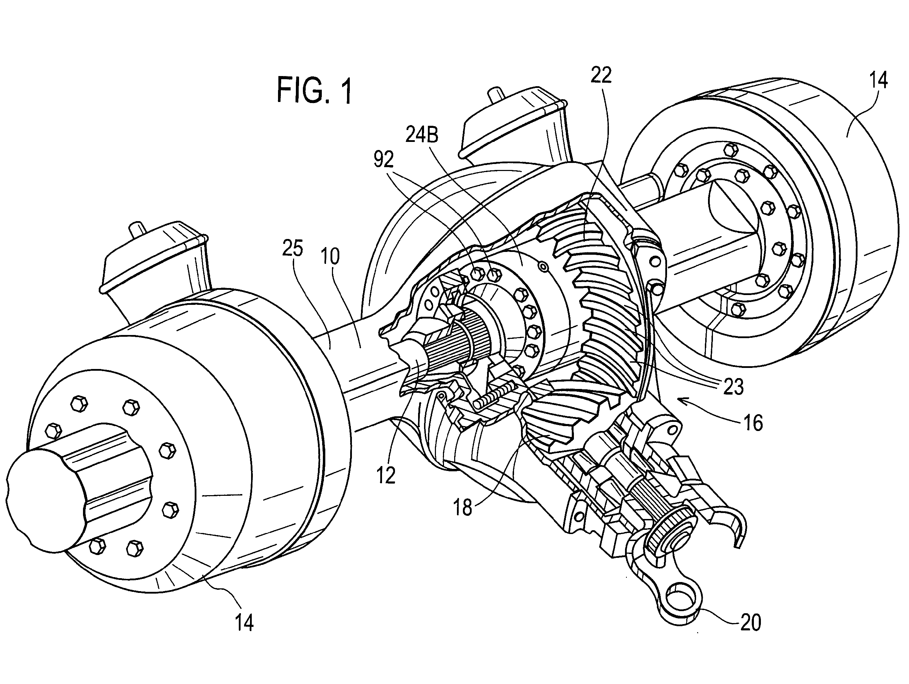

With reference to figure 1 there is shown a drive axle 10 which includes a pair of axle shafts 12 (only one of which is shown) for driving wheels (not shown) secured to wheel hubs 14. When the vehicle is driven along a straight path, the wheel hubs 14 will be turning at approximately the same speed and the drive torque will be equally split between both wheels. When the vehicle negotiates a turn, the outer wheel has to travel over a greater distance than the inner wheel. The differential assembly 16 allows the inner wheel to turn more slowly than the outer wheel as the vehicle negotiates the turn.

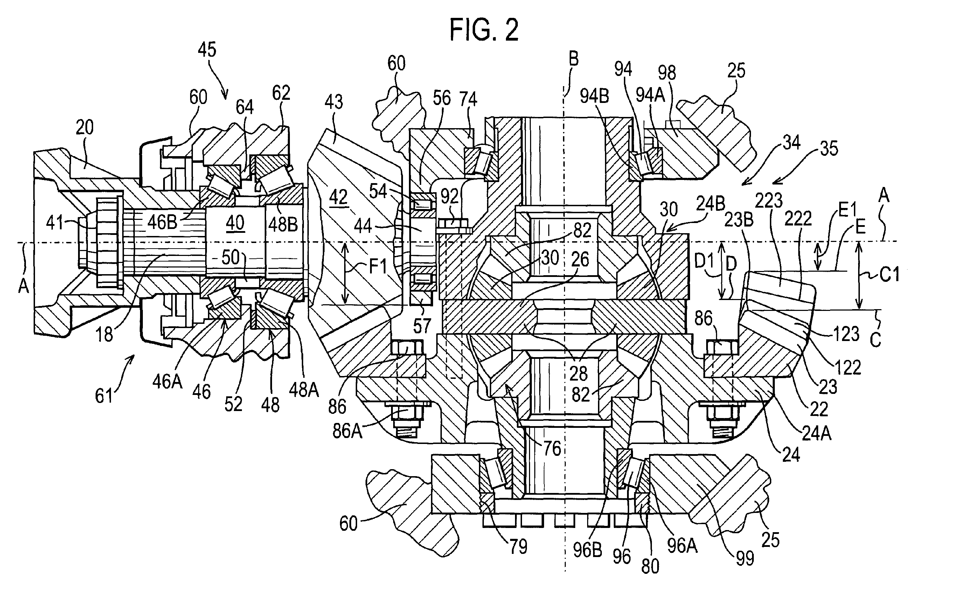

Power is transmitted from an engine and transmission (not shown) to the drive axle 10 via a longitudinally extending drive shaft (not shown). The drive shaft is coupled to an input pinion 18 via a yoke assembly 20. The input pinion 18 is in constant mesh with a differential ring gear 22. As shown in figure 2, the ring gear 22 is bolted (via bolts 86 and nuts 86A) to a differential casing 24 that turns with the ring gear 22.

A differential spider 26 has four support shafts 28 (only two of which are shown) that are orientated in the shape of a cross. One differential pinion gear 30 is supported for rotation on each support shaft 28. Power is transferred from the differential casing 24 to side gears 82, that are splined to the axle shafts 12. The side gears 82 are in constant mesh with the differential pinion gears 30. The outer ends of axle shafts 12 are bolted to the wheel hubs 14. An axle housing 25 is used to enclose and protect the differential assembly 16, gearing and axle shafts 12. In particular the axle housing and differential carrier (see below) completely enclose the common component 70 (see below) and the separate component 76 (see below).

When the vehicle is driven in a straight path, the ring gear 22, differential casing 24, spider 26, differential pinion gears 30 and side gears 32 all rotate as one unit to transfer power to the axle shafts 12. There is no relative movement between the differential pinion gears 30 and the side gears 32. When the vehicle turns, the differential pinion gears 30 rotate on their respective shafts 28 to speed up the rotation of one axle shaft 12 whilst slowing the rotation of the other axle shaft 12.

Consideration of figure 2 shows input pinion 18 has a pinion shaft 40, a pinion gear 42 having pinion teeth 43 and a pinion spigot 44.

The input pinion 18 is rotatably mounted about pinion axis A via a pinion shaft bearing arrangement which includes taper roller bearings 46 and 48. The outer races 46A and 48A of the taper roller bearings are mounted in a housing 62 of a differential carrier 60. A land 64 acts to space apart the outer races 46A and 48A. A spacer 50 acts to space apart the inner races 46B and 48B of the taper roller bearings 46 and 48. The pre-load on bearings 46 and 48 can be adjusted by varying the length of spacer 50 (typically by substituting a different spacer having a different length).

The ring gear 22 includes an array of gear teeth 23 and rotates about axis B (as will be further described below) and it is important to set the pinion gear 42 at the correct position relative to axis B. This can be done by providing thicker or thinner shims 52 (which are positioned between land 64 and outer race 48A).

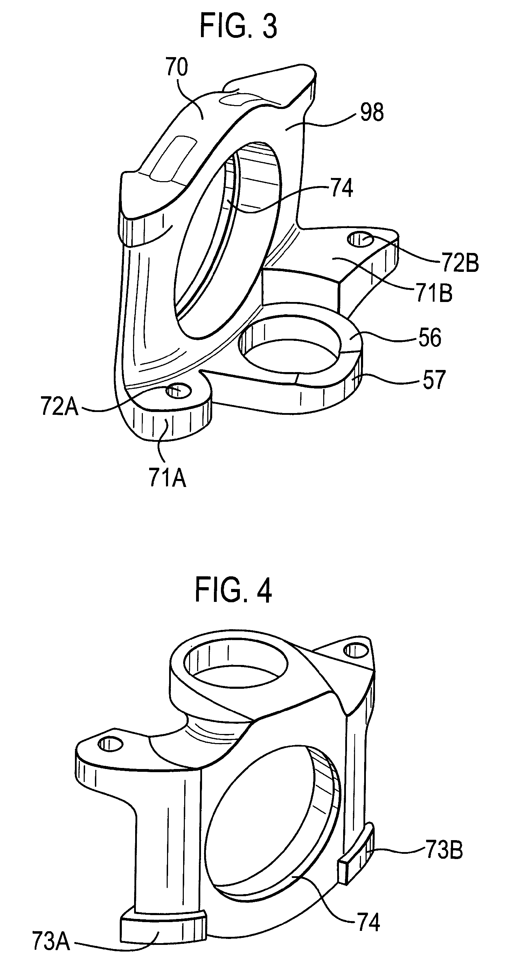

Spigot 44 is supported in spigot bearing 54, which in turn is mounted in spigot bearing housing 56 (see in particular figure 3).

The differential casing 24 is formed from two halves 24A and 24B which are bolted together via bolts 92. A differential casing sub assembly 34 is provided, the major components of which are differential casing halves 24A and 24B, differential ring gear 22, differential spider 26, differential pinion gears 30, bolts 92, bolts 86 and associated nuts 86A and side gears 82.

The differential casing sub assembly 34 is mounted via right differential bearing 94 and left differential bearing 96. Each differential bearing includes an outer race 94A and 96A mounted in respective right and left differential bearing housings 98 and 99. Inner differential bearing races 94B and 96B are mounted on projections of differential casing halves 24B and 24A respectively.

Turning to figures 3 to 5 there is shown the right hand differential bearing housing 98 and the spigot bearing housing 56 which it can be seen have been combined onto a common component 70. In this case, common component 70 has been formed as a unitary component, and furthermore has been machined from a single casting. Common component 70 includes lugs 71A and 71B having holes 72A and 72B through which bolts (not shown) can pass and engage with threaded holes 63A and 63B of differential carrier 60, thereby securing the common component to the differential carrier.

The common component further includes centring abutment surfaces 73A and 73B which engage with corresponding abutment surfaces (not shown) of the axle housing to help centre the differential carrier relative to the axle housing. Common component 70 further includes a bearing race shoulder 74 (best seen in figure 2), the purpose of which will be described below.

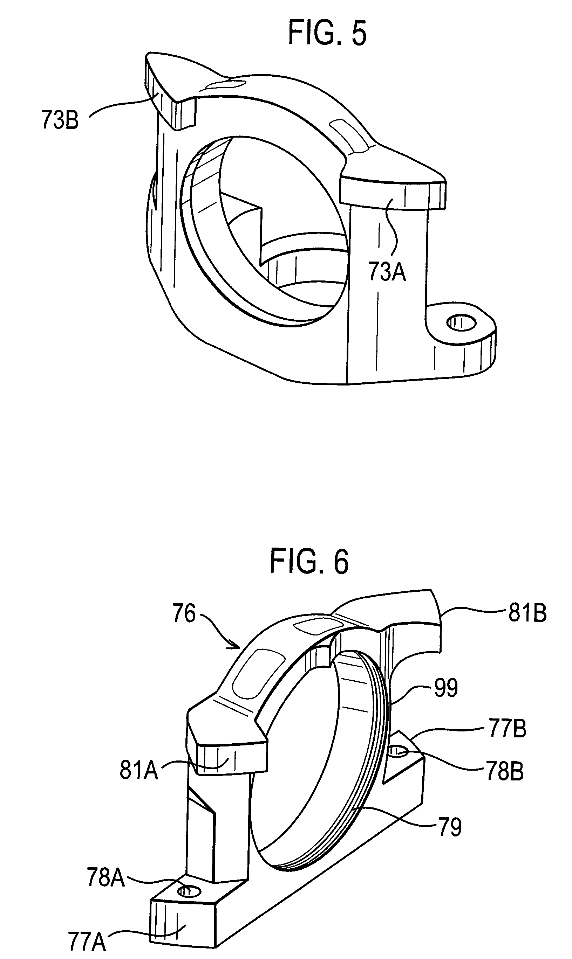

Figure 6 shows the left differential bearing housing 99 which it can be seen has been formed as a separate component 76. Separate component 76 includes lugs 77A and 77B having through holes 78A and 78B through which bolts (not shown) can pass, and engage with threaded holes 64A and 64B of the differential carriers 60 thereby securing the separate component to the differential carrier. Centring abutment surfaces 81A and 81B are provided to engage corresponding centring abutment surfaces (not shown) of the axle housing to help centre the differential carrier relative to the axle housing. The separate component 76 includes a threaded region 79 (only part of which is shown on figure 6 for clarity). An externally threaded bearing pre-load ring 80 threadingly engages threaded region 79, and will be further described below.

The regions 65A and 65B of the differential carrier surrounding holes 64A and 64B are flat and lie in a common plane. This provides a flat surface against which abutment surfaces of lugs 77A and 77B can engage. Similarly the regions 66A and 66B surrounding threaded holes 63A and 63B are also flat and lie in a common plane (though not necessarily common with the plane defined by the regions 65A and 65B) to define abutment surfaces against which corresponding abutment surfaces of lugs 71A and 71B can engage.

One method of assembling the differential carrier assembly is as follows:-

The input pinion 18, bearings 46 and 48, spacer 50, shim 52, yoke 20 can all be assembled into the differential carrier 60 and pinion nut 41 can be tightened such that the pinion bearing pre-load is correct and the axial position of pinion gear 42 is correct. This provides a differential carrier and pinion sub assembly 61.

Separately, the differential casing sub assembly 34, as described above, can be assembled. The differential bearing inner races can be mounted on appropriate differential casing halves, and the differential bearing outer races can be mounted in the appropriate common component and separate component.

Right differential bearing outer race 94A is assembled such that it engages shoulder 74, and bearing pre-load ring 80 is loosely assembled into threaded region 79. Spigot bearing 54 is mounted in spigot bearing housing 56 of the common component.

The common component 70 and separate component 76 can then be loosely assembled onto the differential casing sub assembly 34 to provide a differential casing and bearing housing sub assembly 35 can then be mounted onto the differential carrier. It will be appreciated that during the mounting of the sub assembly 35, the pinion spigot 44 will engage the inner race of the spigot bearing 54 at substantially the same time as the gear teeth 23 of the ring gear 22 meshes with the pinion gear teeth 43. Bolts can then be passed through holes 72A, 72B, 78A and 78B and into the respective threaded holes in the differential carrier in order to releasably secure the common component and the separate component to the differential carrier, thereby securing sub assembly 35. Once this has been done, the bearing pre-load ring 80 can be tightened to set the correct pre-load in differential bearings 94 and 96.

Prior art differential carrier assemblies have each differential bearing housing formed as two parts. One part is formed integrally with the differential carrier, and the other half is formed as a half cap. This requires machining of the integral part of the bearing housing, separate machining of the half cap, the mating together of the half cap onto the integral part of the bearing housing, and then subsequent finish machining. It will be appreciated that since the differential bearing housings of the present invention are not formed in two halves, then the machining of these components is much simplified.

Prior art differential carrier assemblies also have a spigot bearing that is integral with the differential carrier casting. This requires the carrier casting to be machined with undercuts and other complex machining operations. It will be appreciated that the machining of the spigot bearing of the present invention can be carried out separately from the machining of the differential carrier. This means that the machining of the differential carrier is significantly simplified, as is the machining of the spigot bearing housing.

Because the spigot bearing housing and the differential bearing housing can be machined on the common component of the present invention, then the manufacturing tolerances between these two components is significantly reduced. Indeed, the tolerances are such that a fixed bearing shoulder 74 can be provided on the common component, and a single bearing pre-load ring can be provided on the separate component. This simplifies assembly since, in the prior art, each differential bearing had its own associated bearing pre-load ring to enable the differential casing to be positioned at the correct lateral position relative to the pinion gear.

The ring gear and pinion perform two functions. Firstly they rotate the drive through 90 degrees, i.e. whilst input pinion 18 rotates about axis A, ring gear 22 rotates about axis B, which is at 90 degrees to axis A. Secondly, they provide a gear reduction, i.e. ring gear 22 rotates more slowly than input pinion 18.

Depending upon the particular application, different gear reductions are required, and this can typically be achieved by providing a different input pinion and ring gear set. Figure 2 shows the profiles of three different ring gears (22, 122 and 222). The gear teeth 23 of differential gear ring 22 each have a tooth apex 23B. The set of tooth apexes 23B together define a plane C which is spaced by distance C1 from axis A.

The apexes of the teeth of ring gear 122 define a plane D which is spaced by distance D1 from axis A, and similarly, the apexes of the teeth of ring gear 222 define a plane E which is spaced by distance E1 from axis A.

Consideration of figures 2 and 3 show that spigot bearing housing 56 has a region 57 which is remote from axis A. The outer edge of region 56 is spaced by distance F1 from axis A.

It will be appreciated from figure 2 that distance F1 is larger than distance E1 and D1.

Differential carrier assemblies are known wherein the equivalent distance E1 is less than the equivalent distance F1 and wherein the spigot bearing housing is integral with the differential carrier. Thus, in order to assemble the differential casing sub assembly, it is necessary to position the differential casing sub assembly to the left relative to its final position as the ring gear tooth apexes pass the spigot bearing housing, and then move the differential casing sub assembly rightwardly in order to mesh the ring gear with the pinion gear so that the differential casing sub assembly sits in its correct final position. This requires awkward manoeuvring of the components during assembly and also requires a clear space envelope to be provided to accommodate such manoeuvring.

It will be appreciated that during the above mentioned assembly process of the present invention, it is possible to position the spigot bearing housing in the annular recess that is immediately radially inboard of the ring gear teeth when the common component is loosely assembled onto the differential casing sub assembly when sub assembly 35 is formed. By carrying out this operation remote from the differential carrier, no awkward manoeuvring of the sub assembly 35 relative to the differential carrier and pinion sub assembly 61 is required at a later stage, thereby simplifying assembly and minimising the clear space envelope requirement.

An alternative way of assembling the differential carrier is to mount the spigot bearing 54 on the spigot first, and then the outer race of the spigot bearing will engage with the spigot bearing housing as the sub assembly 35 is mated with the sub assembly 61.

## Claims

1. A differential carrier assembly including
a differential carrier having a pinion shaft bearing arrangement housing,
a differential casing having a ring gear and being supported on right and left differential bearings for rotation about a differential axis (B), the right and left differential bearings each being supported in respective right and left bearing housings,
a pinion having a pinion gear in meshing engagement with the ring gear, and having a spigot positioned on said differential axis side of the pinion gear and a pinion shaft positioned on an opposite side of the pinion gear from the spigot, the spigot being supported in a spigot bearing with the spigot bearing being supported in a spigot bearing housing, and the pinion shaft being supported in a pinion shaft bearing arrangement with the pinion shaft bearing arrangement being supported in the pinion shaft bearing arrangement housing
in which one of the right or left bearing housings and the spigot bearing housing are formed on a common component which is separate from and securable to the differential carrier.

2. A differential carrier assembly as defined in claim 1 in which the common component is formed as a unitary component.

3. A differential carrier assembly as defined in claim 2 in which the common component is formed from a casting.

4. A differential carrier assembly as defined in any preceding claim in which the other of the right and left bearing housings is formed as a separate component which is securable to the differential carrier, preferably the separate component is securable to the differential carrier via lugs.

5. A differential carrier assembly as defined in any preceding claim in which the common component includes lugs to secure it to the differential carrier.

6. A differential carrier assembly as defined in any preceding claim in which the common component includes a fixed bearing race shoulder for abutment by an outer race of the associated differential bearing.

7. A differential carrier assembly as defined in any preceding claim in which the spigot bearing defines a pinion axis about which the pinion rotates, and the ring gear is mounted on one side of said pinion axis, the ring gear including an array of teeth each having an apex, the apexes defining a tooth apex plane, the spigot bearing housing having a region on said one side remote from the pinion axis,
in which said region is spaced further from said pinion axis than said tooth apex plane.

8. A method of assembling a differential carrier assembly including steps of
1) providing a differential carrier having a pinion shaft bearing arrangement housing
2) providing a differential casing having a ring gear
3) providing a right differential bearing
4) providing a left differential bearing
5) providing a right differential bearing housing
6) providing a left differential bearing housing
7) providing a pinion having a pinion shaft, a pinion gear and a spigot with the pinion gear being between the pinion shaft and the spigot
8) providing a spigot bearing
9) providing a spigot bearing housing
in which one of the right or left bearing housing and the spigot bearing housing are formed on a common component which is separate from and securable to the differential carrier,
10) supporting the differential casing on the right and left differential bearings
11) supporting the right and left differential bearings in the respective right and left bearing housings
12) providing a pinion shaft bearing arrangement
13) rotatably mounting the pinion in the differential carrier via the pinion shaft bearing arrangement
14) mounting the spigot bearing on or in one of the spigot or the spigot bearing housing
15) mounting the differential casing on the differential carrier and meshing the ring gear with the pinion gear
16) mounting the spigot bearing on or in the other of the spigot or the spigot bearing housing
17) securing the common component to the differential carrier

9. A method of assembling a differential carrier assembly as defined in claim 8 in which steps 10 and 11 are carried out remotely from the differential carrier.

10. A method as defined in claim 9 in which the spigot bearing defines a pinion axis about which the pinion rotates and the ring gear is mounted on one side of said pinion axis,
the method including the steps of providing the ring gear with an array of teeth each having an apex, the apexes defining a tooth apex plane,
providing the spigot bearing housing with a region on said one side remote from the pinion axis,
in which said region is spaced further from said pinion axis than said tooth apex plane.

11. A method of assembling a differential carrier assembly as defined in claim 8 or 9 or 10
in which step 15 is carried out at substantially the same time as step 16.

12. A method of assembling a differential carrier assembly as defined in any one of claims 8 to 11 including the step of providing the other of the right and left bearing housing in the form of a separate component, securing the separate component to the differential carrier.

13. A method of assembling a differential carrier assembly as defined in claim 12 including the steps of
providing the common component with a bearing race shoulder,
providing the separate component with a threaded portion
providing a bearing preload ring having a ring thread
engaging the ring thread in the threaded portion
adjusting the bearing preload ring to provide correct preload in the differential bearings between the preload ring and the shoulder.

14. A method of assembling a differential carrier assembly as defined in any one of claims 8 to 13 in which step 13 is carried out before step 17.

15. A method of assembling a differential carrier assembly as defined in any one of claims 8 to 14 in which step 13 is carried out by inserting the pinion shaft into the pinion shaft bearing assembly housing from a differential casing side of the pinion shaft bearing assembly housing.
